# EUROPEAN PATENT APPLICATION

(11) **EP 4 616 726 A1**
(43) Date of publication of application: **17.09.2025**
(21) Application number: 25160109.2
(22) Date of filing: 25.02.2025
(51) Int. Cl.: A23N 4/02, A23N 4/08

(54) **FRUIT PIT REMOVAL DEVICE**

(30) Priority: 13.03.2024 IL 31147724
(71) Applicant: Ardom Regional Enterprizes Ltd., 8880500 Kibbutz Eilot (IL)
(72) Inventor: TABIB, Daniel, Carmiel (IL); ZAROUR, Jeries, 7220942 Ramla (IL)
(74) Representative: Jaeger, Michael David

(57) **Abstract**

A fruit pit removal device (10) for removing a pit (50) from a fruit (48) has a shaft (64) to eject the pit from the fruit; opposing top (12) and bottom (14) parts, of which each includes top and bottom surfaces (16, 18, 22, 24) and a peripheral surface (20, 26) extending therebetween; the peripheral surface has front and rear surfaces (28, 30, 36, 38) and at least two opposing side surfaces (32, 34, 40, 42) extending therebetween; wherein the fruit pit removal device can be in an open or closed position; and when the fruit pit removal device is in a closed position, the bottom surface and the side surfaces of the top part and the top surface and the side surfaces of the bottom part cover the fruit peripheral surface (56).

## Description

### FIELD OF THE INVENTION

The present invention relates to a fruit pit removal device and in particular to a date pit removal device which preserves the exterior shape of the date, even with a soft exterior shell.

### BACKGROUND OF THE INVENTION

Nowadays, the fruit market often includes the sale of fruits that have already been peeled or had their pits removed. There are various machines for the removal of the pits from a variety of fruits. If the fruits have a relatively rigid exterior shell, the exterior shape of the fruit is preserved despite the process of said pit removal, even though a pressure is applied on the fruit exterior side in the pit removal process. However, there are certain types of fruits, for example premium dates, which have a soft exterior shell and as a result, the process of the fruit pit removal damages the shape and shell of the fruit.

A few attempts have been made to create a device which overcomes this problem, such as US Patent No. 9,125,433 or Chinese Patent Application No. 201910560442.4, but none of the devices protects the fruit from all the directions during the pit removal process. Therefore, when the fruit has a soft exterior shell, it is difficult to protect the shell or the shape of the fruit from getting damaged.

It is an object of the present invention to provide a fruit pit removal device that significantly reduces or overcomes the aforementioned disadvantages. Furthermore, it is an object of the present invention to provide a fruit pit removal device which covers the fruit from the front, back and the entire peripheral side of the fruit, therefore from each direction.

It is further an object of the present invention to provide a fruit pit removal device which has an elliptic shape to accommodate the date in a perfectly fitting space. The date is fixed and centered in the recess, also during the pit removal process, therefore the result is that the pit alone is out of the date. Furthermore, the fruit pit removal device is very easy to use, and does not require any use of force or pressure in the process. It has a low cost, therefore it is affordable in a commercial or individual scale.

### SUMMARY OF THE INVENTION

In accordance with the present invention there is a fruit pit removal device for removing a pit from a fruit having:
a shaft to eject the pit from the fruit;
opposing top and bottom parts, of which each includes top and bottom surfaces and a peripheral surface extending therebetween;
   the peripheral surface has front and rear surfaces and at least two opposing side surfaces extending therebetween; wherein
   the fruit pit removal device can be in an open or closed position; and
   when the fruit pit removal device is in a closed position, the bottom surface and the side surfaces of the top part and the top surface and the side surfaces of the bottom part cover the fruit peripheral surface.

In accordance with embodiments of the present invention, the bottom surface of the top part and the top surface of the bottom part have each a recess to accommodate the fruit.

In accordance with some embodiments, the bottom surface of the top part and the top surface of the bottom part have an elliptical recess.

In accordance with some embodiments, when the fruit pit removal device is in a closed position, the bottom surface of the top part abuts the top surface of the bottom part.

In accordance with some embodiments, when the fruit pit removal device is in a closed position, the front surfaces of the top and bottom parts create a hole together.

In accordance with some embodiments, when the fruit pit removal device is in a closed position, the rear surfaces of the top and bottom parts create a hole together.

In accordance with some embodiments, the fruit includes a front surface. When the fruit pit removal device is in a closed position, the front surfaces of the top and bottom parts with the created hole cover partially the front surface of the fruit.

In accordance with some embodiments, the fruit includes a rear surface. When the fruit pit removal device is in a closed position, the rear surfaces of the top and bottom parts with the created hole cover partially the rear surface of the fruit.

In accordance with some embodiments, wherein the fruit is a date.

In accordance with some embodiments, when the fruit pit removal device is in a closed position, the shaft is inserted into the hole of the rear surfaces of the top and bottom parts.

In accordance with some embodiments, when the fruit pit removal device is in a closed position, the shaft is inserted into the center of the fruit and ejects the pit out of the fruit.

In accordance with some embodiments, when the fruit pit removal device is in a closed position, the shaft pushes the pit towards the hole of the front surfaces and out of the device.

In accordance with some embodiments, the fruit is manually placed the on the recess and the fruit pit removal device is manually moved from an open to closed position.

In accordance with some embodiments, the fruit is placed the on the recess and the fruit pit removal device is moved from an open to closed position by a machine.

In accordance with some embodiments, the rear surfaces of the top and bottom parts are attached by springs.

In accordance with some embodiments, the rear surfaces of the top and bottom parts are attached separately to the machine which places the top part on the bottom part.

In accordance with some embodiments, the recesses have the same size.

In accordance with some embodiments, the recesses have the same shape.

In accordance with some embodiments, the recesses are located in an identical opposing location on the bottom surface of the top part and the top surface of the bottom part.

In accordance with some embodiments, the fruit pit removal device is multiplied to multiple fruit pit removal devices in order to simultaneously remove multiple pits from multiple fruits.

There is also provided in accordance with embodiments of the present invention a method of removing a pit from a fruit, including the steps of:
(i) providing a fruit pit removal device for removing a pit from a fruit having a front surface, a rear surface and a peripheral surface, including:
   opposing top and bottom parts, of which each includes a recess and top and bottom surfaces and a peripheral surface extending therebetween;
   the peripheral surface includes front and rear surfaces and at least two opposing side surfaces extending therebetween;
   a shaft;
(ii) placing a fruit on the recess of the bottom part;
(iii) moving the fruit pit removal device from an open to closed position, by placing the top part on the bottom part, a hole is created at the front and rear surfaces by the recess of each part, the bottom surface and the side surfaces of the top part and the top surface and the side surfaces of the bottom part cover the fruit peripheral surface, the front surfaces of the top and bottom parts covers partially the front surface of the fruit, and the rear surfaces of the top and bottom parts cover partially the rear surface of the fruit;
(iv) inserting the shaft into the hole of the rear surfaces and the fruit, resulting in pushing the pit out of the fruit towards the hole of the front surfaces and out of the device.

The present invention has the preferred advantage over the prior art of providing a fruit pit removal device and method for obtaining premium fruits such as premium dates, with their pit removed without damaging the fruit, the shell of the fruit or the shape of the fruit.

Further or additional preferred advantages of the present invention are obvious from the general discussion above as well as the detailed discussion of the invention as provided below. In particular, the present invention provides an improved fruit pit removal device which keeps the fruit in the center without any movement during the pit removal process.

### BRIEF DESCRIPTION OF THE DRAWINGS

For a better understanding of the present invention and to show how the same may be carried out in practice, reference will now be made to the accompanying drawings, in which:
**Fig. 1** is a perspective view of a fruit pit removal device in an open position according to the present invention;
**Fig. 2** is a perspective view of the fruit pit removal device shown in Fig. 1 in a nearly closed position;
**Fig. 3** is a front view of the fruit pit removal device shown in Fig. 1 in a closed position during the pit removal process;
**Fig. 4** is a perspective view of the fruit pit removal device shown in Fig. 1 in a closed position with a pit removed; and
**Fig. 5** is a rear view of the fruit pit removal device shown in Fig. 2.

### DETAILED DESCRIPTION OF THE PRESENT INVENTION

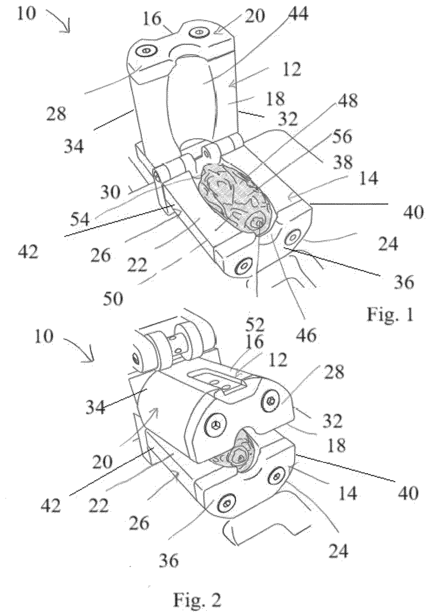

Attention is drawn to Fig. 1, showing a fruit pit removal device **10** in accordance with the present invention. The fruit pit removal device **10** has opposing top and bottom parts **12, 14.** The top part **12** has top and bottom surfaces **16, 18** and a peripheral surface **20** extending therebetween. The bottom part **14** has top and bottom surfaces **22, 24** and a peripheral surface **26** extending therebetween. The peripheral surface **20** of top part **12** has front and rear surfaces **28, 30** and at least two opposing side surfaces **32, 34** extending therebetween. The peripheral surface **26** of bottom part **14** has front and rear surfaces **36, 38** and at least two opposing side surfaces **40, 42** extending therebetween. The bottom surface **18** of the top part **12** and the top surface **22** of the bottom part **14** have each a recess **44, 46** to accommodate a fruit **48** having a pit **50.** The recesses **44, 46** may have the same size and the shape, if desired. Furthermore, the recesses **44, 46** may be located in an identical opposing location on each of the two opposing surfaces **18, 22,** i.e., on the bottom surface **18** of the top part **12** and the top surface **22** of the bottom part **14,** if desired, in accordance with the shape, type and size of the fruit **48.**

The fruit **48** has a front surface **52,** a rear surface **54** and a peripheral surface **56** extending therebetween. Despite the reference here for the fruit **48** to be a date, the fruit **48** may be of any kind. If the fruit **48** is a date, the recesses **44, 46** are elliptical, in order to accommodate the date **48** perfectly according to the shape and size of the date **48.**

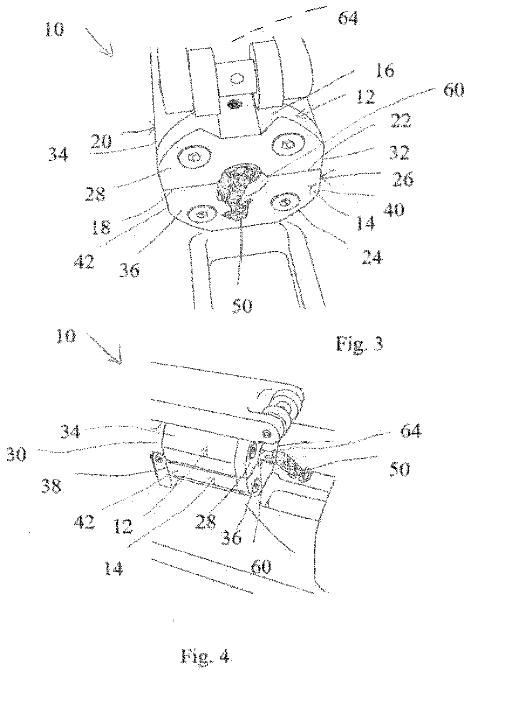

The fruit pit removal device **10** can be in an open position, as can be seen in Fig. 1. In this open position, the fruit **48** may be placed, manually or by a machine. Fig. 2 shows an intermediate position in order to show how the surfaces of the fruit pit removal device **10** cover the fruit **48.** The fruit pit removal device **10** can be in a closed position, as can be seen in Figs. 3 and 4, by placing the top part **12** on the bottom part **14,** manually or by a machine. In this position, the bottom surface **18** of the top part **12** may abut the top surface **22** of the bottom part **14.** Furthermore, in this position, the bottom surface **18** and the side surfaces **32, 34** of the top part **12** and the top surface **22** and the side surfaces **40, 42** of the bottom part **14** cover the fruit peripheral surface **56,** the front surfaces **28, 36** of the top and bottom parts **12, 14** cover the front surface **52** of the fruit **48,** the rear surfaces **30, 38** of the top and bottom parts **12, 14** cover the rear surface **54** of the fruit **48.**

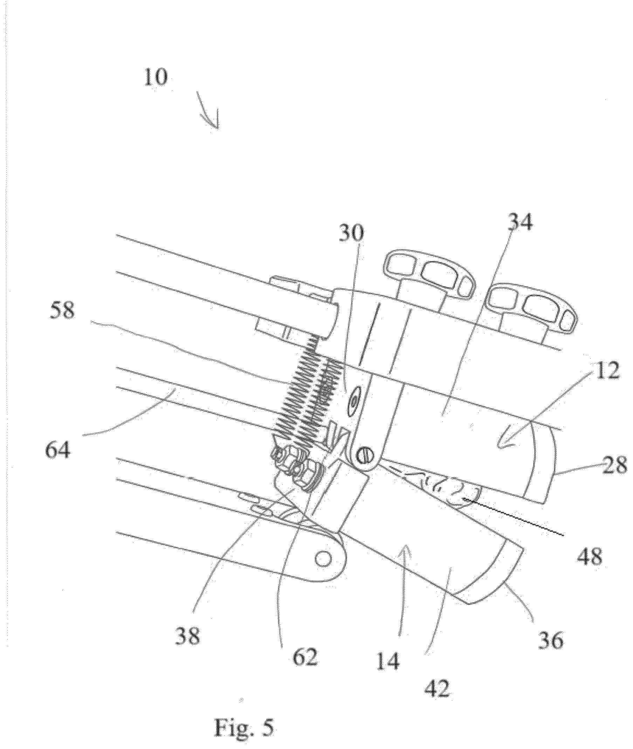

Attention is now drawn to Fig. 5. The rear surfaces **30, 38** of the top and bottom parts **12, 14** are attached via springs **58.** Another technique to attach the two surfaces can be applied, such as screws, glue, brackets or any other technique known in the art, such as connecting each part directly and separately to a machine which places the top part **12** on the bottom part **14** without the need to connect them directly. The front surfaces **28, 36** of the top and bottom parts **12, 14** create a hole **60** together by the recesses **44, 46** of each part **12, 14.** The rear surfaces **30, 38** of the top and bottom parts **12, 14** create a hole **62** together by the recesses **44, 46** of each part **12, 14.**

Attention is back to Fig. 3. The fruit pit removal device **10** has a shaft **64** to be inserted into the fruit **48** in order to remove the fruit pit **50** by pushing it out. When the fruit pit removal device **10 is** in a closed position, the pit removal process occurs, manually or by a machine. When the fruit pit removal device **10** is in a closed position, the shaft **64** is inserted into the hole **62** of the rear surfaces **30, 38** of the top and bottom parts **12, 14.** Then, the shaft **64** is inserted into the center of the fruit **48** and ejects the pit **50** out of the fruit **48.** Finally, the shaft **64** pushes the pit **50** towards the hole **62** of the front surfaces **28, 36** of the top and bottom parts **12, 14** and out of the device, as can be seen in Fig. 4.

The fruit pit removal device **10** can be multiplied to multiple devices together treated by a machine for a commercial use in order to simultaneously remove multiple pits **50** from multiple fruits **48,** or be an individual device for a self-use. Either way, the fruit **48** is kept in a fixed position in the center, therefore the shaft **64** is inserted always to the center of the fruit **48** and does not damage the shell or the shape of the fruit **48,** even if it is a soft shell which can be damaged easily.

It will be appreciated that the present invention not only provides a fruit pit removal device and method which keeps the fruit fixed and in the center of the machine, keeps the fruit shell and shape complete with no damage, but at the same time is easy, simple to use, without consuming a lot of funds or time for its operation. Furthermore, it can be used manually or by a machine, making it available for any necessary use.

Although the present invention has been described to a certain degree of particularity, it should be understood that various alterations and modifications could be made without departing from the scope of the invention as hereinafter claimed.

The following example aspects are illustrative only and may be combined with aspects of other examples or teachings described herein, without limitation.

Aspect 1 is a fruit pit removal device (10) for removing a pit (50) from a fruit (48) having a peripheral surface (56), comprising:
a shaft (64) to eject the pit (50) from the fruit (48);
   opposing top and bottom parts (12, 14), of which each comprises top and bottom surfaces (16, 18, 22, 24) and a peripheral surface (20, 26) extending therebetween;
each of the peripheral surface (20, 26) comprises front and rear surfaces (28, 30, 36, 38) and at least two opposing side surfaces (32, 34, 40, 42) extending therebetween; wherein
the fruit pit removal device (10) can be in an open or closed position; and
when the fruit pit removal device (10) is in a closed position, the bottom surface (18) and the side surfaces (32, 34) of the top part (12) and the top surface (22) and the side surfaces (40,42) of the bottom part (14) cover the fruit peripheral surface (56).

In aspect 2, the fruit pit removal device (10) according to aspect 1, wherein the bottom surface (18) of the top part (12) and the top surface (22) of the bottom part (14) have each a recess (44, 46) to accommodate the fruit (48).

In aspect 3, the fruit pit removal device (10) according to aspect 2, wherein the bottom surface (18) of the top part (12) and the top surface (22) of the bottom part (14) have an elliptical recess (44, 46).

In aspect 4, the fruit pit removal device (10) according to aspect 1, wherein when the fruit pit removal device (10) is in a closed position, the bottom surface (18) of the top part (12) abuts the top surface (22) of the bottom part (14).

In aspect 5, the fruit pit removal device (10) according to aspect 3, wherein when the fruit pit removal device (10) is in a closed position, the front surfaces (28, 36) of the top and bottom parts (12, 14) create a hole (60) together.

In aspect 6, the fruit pit removal device (10) according to aspect 5, wherein when the fruit pit removal device (10) is in a closed position, the rear surfaces (30, 38) of the top and bottom parts (12, 14) create a hole (62) together.

In aspect 7, the fruit pit removal device (10) according to aspect 6, wherein the fruit (48) comprises a front surface (52); wherein
when the fruit pit removal device (10) is in a closed position, the front surfaces (28, 36) of the top and bottom parts (12, 14) with the created hole (60) cover partially the front surface (52) of the fruit (48).

In aspect 8, the fruit pit removal device (10) according to aspect 7, wherein the fruit (48) comprises a rear surface (54); wherein
when the fruit pit removal device (10) is in a closed position, the rear surfaces (30, 38) of the top and bottom parts (12, 14) with the created hole (62) cover partially the rear surface (54) of the fruit (48).

In aspect 9, the fruit pit removal device (10) according to aspect 1, wherein the fruit (48) is a date.

In aspect 10, the fruit pit removal device (10) according to aspect 8, wherein when the fruit pit removal device (10) is in a closed position, the shaft (64) is inserted into the hole (62) of the rear surfaces (30, 38) of the top and bottom parts (12, 14).

In aspect 11, the fruit pit removal device (10) according to aspect 10, wherein when the fruit pit removal device (10) is in a closed position, the shaft (64) is inserted into the center of the fruit (48) and ejects the pit (50) out of the fruit (48).

In aspect 12, the fruit pit removal device (10) according to aspect 11, wherein when the fruit pit removal device (10) is in a closed position, the shaft (64) pushes the pit (50) towards the hole (60) of the front surfaces (28, 36) of the top and bottom parts (12, 14) and out of the device (10).

In aspect 13, the fruit pit removal device (10) according to aspect 1, wherein the fruit (48) is manually placed the on the recess (44) and the fruit pit removal device (10) is manually moved from an open to closed position.

In aspect 14, the fruit pit removal device (10) according to aspect 1, wherein the fruit (48) is placed the on the recess (44) and the fruit pit removal device (10) is moved from an open to closed position by a machine.

In aspect 15, the fruit pit removal device (10) according to aspect 1, wherein the rear surfaces (30, 38) of the top and bottom parts (12, 14) are attached via springs (58).

In aspect 16, the fruit pit removal device (10) according to aspect 14, wherein the rear surfaces (30, 38) of the top and bottom parts (12, 14) are attached separately to the machine which places the top part (12) on the bottom part (14).

In aspect 17, the fruit pit removal device (10) according to aspect 2, wherein the recesses (44, 46) have the same size.

In aspect 18, the fruit pit removal device (10) according to aspect 2, wherein the recesses (44, 46) have the same shape.

In aspect 19, the fruit pit removal device (10) according to aspect 2, wherein the recesses (44, 46) are located in an identical opposing location on the bottom surface (18) of the top part (12) and the top surface (22) of the bottom part (14).

In aspect 20, the fruit pit removal device (10) according to aspect 1 is multiplied to multiple fruit pit removal devices (10) in order to simultaneously remove multiple pits (50) from multiple fruits (48).

Aspect 20 is a method of removing a pit (50) from a fruit (48), comprising the steps of:
(i) providing a fruit pit removal device (10) for removing the pit (50) from the fruit (48) having a front surface (52), a rear surface (54) and a peripheral surface (56), comprising:
   opposing top and bottom parts (12, 14), of which each comprises a recess (44, 46) and top and bottom surfaces (16, 18, 22, 24) and a peripheral surface (20, 26) extending therebetween;
   each of the peripheral surface (20, 26) comprises front and rear surfaces (28, 30, 36, 38) and at least two opposing side surfaces (32, 34, 40, 42) extending therebetween;
   a shaft (64) to eject the pit (50) from the fruit (48);
(ii) placing a fruit (48) on the recess (44) of the bottom part (14);
(iii) moving the fruit pit removal device (10) from an open to closed position, by placing the top part (12) on the bottom part (14), a hole (60, 62) is created at the front and rear surfaces (28, 30, 36, 38) by the recess (44, 46) of each part (12,14), the bottom surface (18) and the side surfaces (32, 34) of the top part (12) and the top surface (22) and the side surfaces (40,42) of the bottom part (14) cover the fruit peripheral surface (56), the front surfaces (28, 36) of the top and bottom parts (12, 14) with the created hole (60) cover partially the front surface (52) of the fruit (48), and the rear surfaces (30, 38) of the top and bottom parts (12, 14) with the created hole (62) cover partially the rear surface (54) of the fruit (48).;
(iv) inserting the shaft (64) into the hole (62) of the rear surfaces (30, 38) of the top and bottom parts (12, 14) and the fruit (48), resulting in pushing the pit (50) out of the fruit (48) towards the hole (60) of the front surfaces (28, 36) and out of the device (10).

## Claims

1. Fruit pit removal device (10) for removing a pit (50) from a fruit (48) having a peripheral surface (56), comprising:
a shaft (64) to eject the pit (50) from the fruit (48);
opposing top and bottom parts (12, 14), of which each comprises top and bottom surfaces (16, 18, 22, 24) and a peripheral surface (20, 26) extending therebetween;
each of the peripheral surface (20, 26) comprises front and rear surfaces (28, 30, 36, 38) and at least two opposing side surfaces (32, 34, 40, 42) extending therebetween; wherein
the fruit pit removal device (10) can be in an open or closed position; and
when the fruit pit removal device (10) is in a closed position, the bottom surface (18) and the side surfaces (32, 34) of the top part (12) and the top surface (22) and the side surfaces (40,42) of the bottom part (14) cover the fruit peripheral surface (56); and wherein
the fruit pit removal device (10) is moved from an open to closed position by a machine.

2. The fruit pit removal device (10) according to claim 1, wherein the bottom surface (18) of the top part (12) and the top surface (22) of the bottom part (14) have each a recess (44, 46) to accommodate the fruit (48).

3. The fruit pit removal device (10) according to claim 1 or 2, wherein the bottom surface (18) of the top part (12) and the top surface (22) of the bottom part (14) have an elliptical recess (44, 46) and the fruit (48) is a date.

4. The fruit pit removal device (10) according to claim 1, 2 or 3, wherein when the fruit pit removal device (10) is in a closed position, the bottom surface (18) of the top part (12) abuts the top surface (22) of the bottom part (14) and the front surfaces (28, 36) of the top and bottom parts (12, 14) create a hole (60) together and the rear surfaces (30, 38) of the top and bottom parts (12, 14) create a hole (62) together.

5. The fruit pit removal device (10) according to any one of the preceding claims, wherein the fruit (48) comprises a front surface (52) and a rear surface (54); wherein
when the fruit pit removal device (10) is in a closed position, the front surfaces (28, 36) of the top and bottom parts (12, 14) with the created hole (60) cover partially the front surface (52) of the fruit (48) and the rear surfaces (30, 38) of the top and bottom parts (12, 14) with the created hole (62) cover partially the rear surface (54) of the fruit (48).

6. The fruit pit removal device (10) according to any one of the preceding claims, wherein when the fruit pit removal device (10) is in a closed position, the shaft (64) is inserted into the hole (62) of the rear surfaces (30, 38) of the top and bottom parts (12, 14).

7. The fruit pit removal device (10) according to any one of the preceding claims, wherein when the fruit pit removal device (10) is in a closed position, the shaft (64) is inserted into the center of the fruit (48) and ejects the pit (50) out of the fruit (48).

8. The fruit pit removal device (10) according to any one of the preceding claims, wherein when the fruit pit removal device (10) is in a closed position, the shaft (64) pushes the pit (50) towards the hole (60) of the front surfaces (28, 36) of the top and bottom parts (12, 14) and out of the device (10).

9. The fruit pit removal device (10) according to claim 2, wherein the fruit (48) is manually placed on the recess (44) and the fruit pit removal device (10) is manually moved from an open to closed position.

10. The fruit pit removal device (10) according to claim 2, wherein the fruit (48) is placed on the recess (44) by a machine.

11. The fruit pit removal device (10) according to any one of the preceding claims, wherein the rear surfaces (30, 38) of the top and bottom parts (12, 14) are attached via springs (58).

12. The fruit pit removal device (10) according to any one of the preceding claims, wherein the rear surfaces (30, 38) of the top and bottom parts (12, 14) are attached separately to the machine which places the top part (12) on the bottom part (14).

13. The fruit pit removal device (10) according to claim 2, wherein the recesses (44, 46) have the same size and shape and are located in an identical opposing location on the bottom surface (18) of the top part (12) and the top surface (22) of the bottom part (14).

14. The fruit pit removal device (10) according to any one of the preceding claims is multiplied to multiple fruit pit removal devices (10) in order to simultaneously remove multiple pits (50) from multiple fruits (48).

15. A method of removing a pit (50) from a fruit (48), comprising the steps of:
(i) providing a fruit pit removal device (10) for removing the pit (50) from the fruit (48) having a front surface (52), a rear surface (54) and a peripheral surface (56), comprising:
opposing top and bottom parts (12, 14), of which each comprises a recess (44, 46) and top and bottom surfaces (16, 18, 22, 24) and a peripheral surface (20, 26) extending therebetween;
each of the peripheral surface (20, 26) comprises front and rear surfaces (28, 30, 36, 38) and at least two opposing side surfaces (32, 34, 40, 42) extending therebetween;
a shaft (64) to eject the pit (50) from the fruit (48);
(ii) placing a fruit (48) on the recess (44) of the bottom part (14);
(iii) moving the fruit pit removal device (10) from an open to closed position by a machine, by placing the top part (12) on the bottom part (14), a hole (60, 62) is created at the front and rear surfaces (28, 30, 36, 38) by the recess (44, 46) of each part (12,14), the bottom surface (18) and the side surfaces (32, 34) of the top part (12) and the top surface (22) and the side surfaces (40,42) of the bottom part (14) cover the fruit peripheral surface (56), the front surfaces (28, 36) of the top and bottom parts (12, 14) with the created hole (60) cover partially the front surface (52) of the fruit (48), and the rear surfaces (30, 38) of the top and bottom parts (12, 14) with the created hole (62) cover partially the rear surface (54) of the fruit (48).;
(iv) inserting the shaft (64) into the hole (62) of the rear surfaces (30, 38) of the top and bottom parts (12, 14) and the fruit (48), resulting in pushing the pit (50) out of the fruit (48) towards the hole (60) of the front surfaces (28, 36) and out of the device (10).
